# EUROPEAN PATENT SPECIFICATION

(11) **EP 4 019 199 B1**
(45) Date of publication and mention of the grant of the patent: **25.09.2024**
(21) Application number: 21210421.0
(22) Date of filing: 25.11.2021
(51) Int. Cl.: B25J 9/00, B25J 15/00

(54) **FRAME STRUCTURE FOR FOR INDUSTRIAL ROBOT GRIPPER**
GREIFERRAHMENSTRUKTUR FÜR INDUSTRIEROBOTER
STRUCTURE POUR CADRE DE PRÉHENSEUR POUR ROBOT INDUSTRIEL

(30) Priority: 11.12.2020 PL 43631920
(43) Date of publication of application: 29.06.2022
(73) Proprietor: Polmotors Spolka Z Ograniczona Odpowiedzialnoscia, 43-391 Mazancowice (PL)
(72) Inventor: Grabos, Andrzej, 43-346 Bielsko-Biala (PL); Wróbel, Ireneusz, 43-100 Tychy (PL)
(74) Representative: Lampart, Jerzy

(56) References cited:
- EP-A1- 1 927 483
- CN-A- 107 234 186
- CN-A- 108 792 969
- JP-A- H09 242 564
- US-A- 4 092 755

## Description

The present invention relates to a bi-metal frame structure for an industrial robot gripper, designed to handle flat blanks on a production line, in particular while manipulating the blanks in extremely high temperature, above 800 °C, where structurally compensated are flexural thermal deformations. CN 107 234 186 B discloses a frame structure according to the preamble of claim 1.

Hot stamping technological process is performed in high temperature, particularly while uploading to and unloading of the blanks from the furnace. The furnace chamber temperature is between 800 °C and 950 °C.

From the patent description CN111112418 is known a sheet part stamping process that relates to a field of sheet parts machining processes. The sheet part stamping process includes the following steps:
stainless steel sheet is cut in order to obtain a required sheet, the sheet is placed in the heating furnace in order to heat up to 840-900 °C with the heating speed of 30-40 °C / min, heat maintenance during 20-40 minutes and then cooling down of the furnace;
in the die sprayed is a layer of a high temperature resistant lubricant, the die is pre-heated to 240-300 °C and undergoes hot treatment, when the temperature of the metal plate is lowered such to correspond to the temperature of the die, the metal plate is clamped with a mechanical arm to provide fast transfer to the die, which is to undergo forming by punching, the natural cooling to the room temperature takes place and the semi-finished sheet part is produced; and
a sheet is placed in the heating furnace in order to heat up to 180-200 °C, air cooling to room temperature following the temperature maintenance for 10-15 minutes, and the blank can be retrieved when washed with clean water. The method has advantages such that the difficulty of the process is little, the dimensions of the sheet part are stable, thickness distribution is uniform and cracks or deformations do not occur.

Due to operations in such high temperatures, the process is automated, performed by means of industrial robots. To the robot wrist mounted is a special gripper. A typical frame structure of the gripper is a welded frame structure made from closed profiles of rectangular or square cross-sections, comprising a main supporting beam to which relevant arms are mounted thereto. On said arms mounted are relevant gripping devices, in a form of jaws, which have a task to clearly hold and position the blanks in the defined and unchanging position during manipulation thereof. The gripper structure provides automatic closing and opening of the clamping units. It is known from the patent description CN107234186B a lightweight clamping device for hot stamping blanks, which contains a high temperature radiation plate, a frame mechanism fixed on the high temperature radiation plate and a plurality of claw driving mechanisms connected to the frame mechanism. The frame mechanism includes a main beam and a plurality of beams vertically connected to the main beam through the connector.

In order to overcome the above problems, the present invention provides a frame structure as defined in appended claim 1.

The gripper has a task to collect the blank (flat sheet matrix of a defined shape) from the warehouse and transfer it to a heated up to a high temperature (above 800 °C) relevant furnace chamber. Another task of said gripper is to collect the heated blank from the furnace chamber and transfer it to the punch where the sheet will be formed to the final shape. The furnace is composed of several chambers (from two to five) which are located one above the another. The robot with the mounted to the wrist thereof gripper with the collected blank transfers said blank to the selected furnace chamber, withdrawal of the empty gripper takes place, the furnace chamber closes and another furnace chamber opens, the robot places the gripper in the open chamber and collects the heated blanks therefrom and transfers them to the punch. The process is repeated consecutively. Due to the operations in extremely high temperatures, it is typically cooled by air which flows within the supporting structure beams. During serial production, the gripper frame, while transferring the blanks, heats up (absorbing the furnace heat). Having reached a steady operating temperature (150 °C - 200 °C), which is significantly higher than the ambient temperature, the gripper frame deforms. Such deformation is in a form of a bend of the supporting frame towards gravitational pull. In the ambient temperature, the gripper frame bend is little and derives exclusively from the weight of the transferred blanks and self-weight of the structure. Following the heating of the gripper frame up to the operational temperature (150 °C - 200 °C) an additional deflection occurs, which is significantly greater than the initial bend deriving from the self-weight and weight of the blanks. Said additional deformation is a very disadvantageous phenomenon, in particular during positioning of the gripper prior to inserting to the furnace chamber. Said deformation unables accurate positioning of the gripper with the blanks in relation to each of the furnace chamber. A very disadvantageous phenomenon, having the impact on the automation process, is the increase of the gripper deformation from the initial value when the gripper is of the room temperature, to the maximum when the gripper has reached the operating temperature. At that time, a gradual increase of the gripper deformation takes place and the position thereof in relation to the furnace chamber changes. It may result in the gripper collision with the furnace during automatic operation of the production line.

The subject-matter of the new, bi-metal gripper frame is the use of steel of two different thermal expansion values in the structure of the gripper supporting beam. The main supporting beam, arms and fastening to the robot wrist are made of the steel of a greater thermal expansion, for example of stainless steel of austenitic, ferritic, martensitic or ferritic-austensitic type, which thermal expansion coefficient is from 15*10⁻⁶K-1 to 17* 10⁻⁶K-1.

The present invention provides a frame structure for an industrial robot gripper comprising a supporting frame and a reinforcing frame, wherein the supporting frame comprises, welded with each other, a main supporting beam and arms which are mountable to a robot wrist, wherein the reinforcing frame consists of reinforcing beams or a space truss oriented along a main supporting beam, wherein the reinforcing frame is mounted at a base of the supporting frame from the side of the robot wrist, and wherein the difference of thermal expansion values between the supporting frame and the reinforcing frame is 15% to 25%. The supporting frame is made of stainless steel of thermal expansion from 15*10⁻⁶K-1 to 17* 10⁻⁶K⁻¹. The reinforcing frame is made of low-carbon steel of thermal expansion from 10.5*10⁻⁶ K⁻¹ to 12*10⁻⁶ K⁻¹. The length of the beam of reinforcement in the gripper is equal (from 0.35 to 0.5) the gripper length. The length of the beam of reinforcement in the gripper is equal from 0.5 to 0.8 of the gripper length. The reinforcing frame has length which is equal between 0.35 and 0.5 of the gripper length. The reinforcing frame from the truss is divided into 7-9 sections.

The subject of the invention is presented in the embodiment in the drawing, where Fig. 1 shows variants of the bi-metal frame, where Fig. 1a shows the variant with the truss and 1b with two parallel reinforcing beams. Fig. 2 presents the embodiment with the use of the reinforcing frame with the range of reinforcing beams, where Fig. 2a shows details of the frame from the side, Fig. 2b a cross-section of the reinforcing beam, and Fig. 2c a view of the frame from the top, and Fig. 2d an axonometric view from the side of the robot wrist. Fig. 3 presents the embodiment with the use of the reinforcing frame from the truss, where Fig. 3a shows details of the frame from the top, Fig. 3b a view of the frame from the side, and Fig. 3c an axonometric view from the side of the robot wrist.

Such a solution, that is the use of the steels of different thermal expansion coefficients, provides automatic compensation of the thermal deformation, which increases the accuracy of the positioning of the blanks in the furnace.

The reinforcements of the main beam in a form of additional reinforcing beams, additional frame structure, are mounted at the base of the gripper frame from the side of the robot wrist, are made of the steel of lesser thermal expansion, for example low-carbon steel of common quality which thermal expansion coefficient is from 10,5*10⁻⁶ K⁻ to 12*10⁻⁶ K⁻¹. The types of steel to be used should be selected such that the difference of the thermal expansion values of both said parts should be between 15% and 25%. Such a solution provides automatic compensation of the thermal deformation, which increases the accuracy of the positioning of the forms in the furnace.

### Embodiment 1

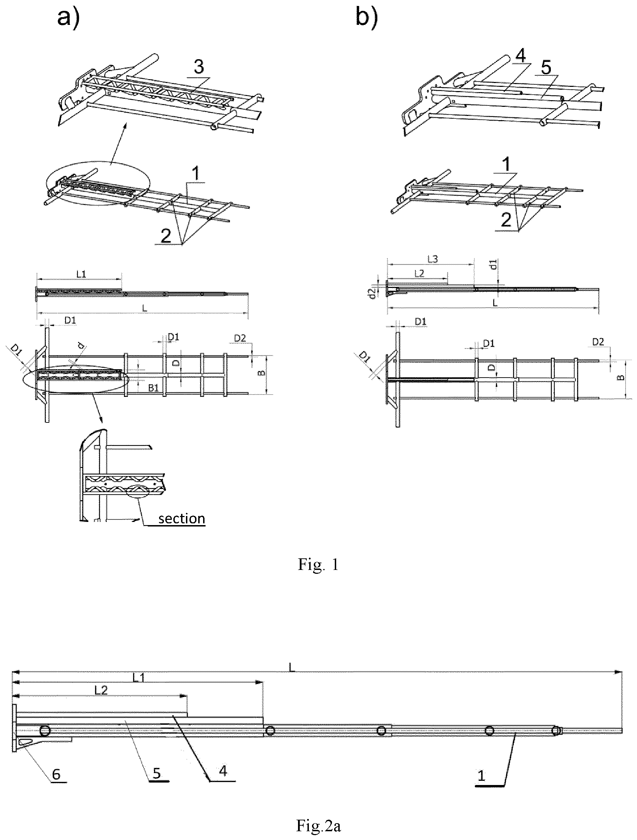

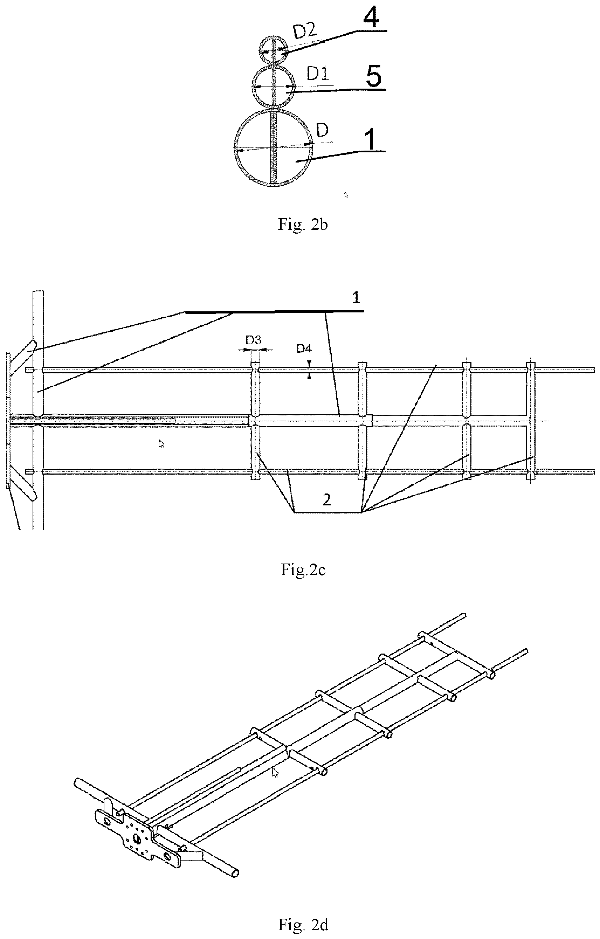

A gripper frame presented in Fig. 2 is a frame structure welded with reinforcing beams, preferably tubes. The frame dimensions are within the range: width from 300 mm to 500 mm and length 1800 mm to 2500 mm. It comprises welded with each other main supporting beams 1 of diameter D equal 60 to 80 mm and a wall thickness 1.5 to 3 mm, the two reinforcing beams 4, 5 from tubes of diameter D1 = from 40 to 50 mm and a wall thickness 1 to 3 mm and D2 = from 24 to 30 mm, arms 2 from tubes of diameter D3= from 30 to 35 mm and a wall thickness from 1.2 to 2 mm and D4 from 10 to 15 mm and a wall thickness from 0.8 to 1.6 mm. Supplementary, the main beam 1 of diameter D and length L and the reinforcing beams 4, 5 of diameter D1 and D2 and of a length respectively L1 and L2 are stiffened by a sheet of a thickness from 1 to 4 mm. The length of the main supporting beam L is from 2000 mm to 2600 mm. The gripper on one side is terminated with a fastening to a robot wrist 6. It is made of a sheet of a thickness from 12 to 18 mm. The main supporting beams 1 of diameter D, gripper arms 2 and the fastening to the robot wrist 6 are made of stainless steel of thermal expansion from 15% to 25% greater than a connected with the whole by welding method reinforcement 2 made of carbon steel tubes. The length of the beam 4 of the reinforcement referred to in Fig. 2 as L1 in the gripper is equal (from 0.35 to 0.5) the gripper **total** length L. The length of the beam 5 of the reinforcement referred to in Fig. 2 as L2 in the gripper is from 0.5 to 0.8 of the beam length L. All the construction elements of the gripper described above are connected with each other by means of electric welding with filet and butt welds. Other mechanical connections between the structure elements of the gripper may be used, such as: bolted connections, riveting, bonding.

### Embodiment 2

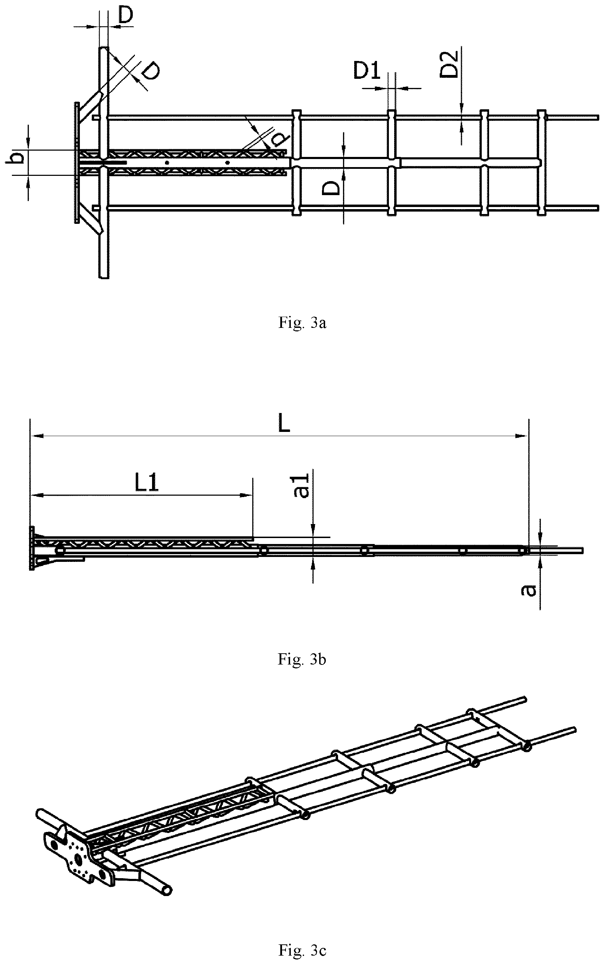

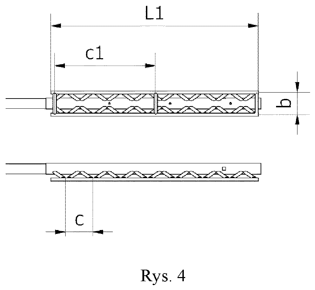

A gripper frame presented in Fig. 3 is a structure welded with two frames, a supporting frame and reinforcing frame. The supporting frame of length L from 2000 mm to 2600 mm and width from 300 mm to 600 mm is made of tubes of diameter D from 60 to 80 mm and a wall thickness 1.5 to 3 mm, D1 from 30 to 35 mm and a wall thickness from 1.2 to 2 mm, D2 from 10 to 15 mm and a wall thickness from 0.8 to 1.6 mm The supporting frame is made of stainless steel which thermal expansion coefficient is from 15 to 17 times 10⁻⁶K⁻¹. The supporting frame is permanently connected, by means of a welded connection, with the reinforcing frame. The reinforcing frame (Fig. 4) has length L1 which is from 0,35 to 0,5 of the supporting frame total length L. The reinforcing frame is made from pipes of diameter d from 14 to 16 mm and a wall thickness from 1 to 2 mm. Width b of the reinforcing frame is from 100 to 120 mm and height a1 is from 40 to 70 mm. The reinforcing frame is divided into 7-9 equal sections, so called segments, of length c. Each section is determined by diagonally located beams forming the reinforcing frame. The reinforcing frame is made of low-carbon steel of common quality which thermal expansion coefficient is from 10,5 to 12 times 10⁻⁶ K⁻¹. The supporting frame is made of steel of thermal expansion from 15% to 25% greater than the reinforcing frame. All the elements of the gripper described above are connected with each other by means of electric welding with fillet and butt welds. Other mechanical connections may be used, such as: bolted connections, riveting, bonding.

## Claims

1. A frame structure for an industrial robot gripper comprising a supporting frame and a reinforcing frame, wherein the supporting frame comprises, welded with each other, a main supporting beam (1) and arms (2) which are mountable to a robot wrist (6), wherein the reinforcing frame consists of reinforcing beams (4,5) or a space truss (3) oriented along a main supporting beam, **characterized in that** the reinforcing frame is mounted at a base of the supporting frame from the side of the robot wrist, and wherein the difference of thermal expansion values between the supporting frame and the reinforcing frame is 15% to 25%.

2. The frame according to Claim 1, **characterized in that** the supporting frame is made of stainless steel of thermal expansion from 15*10⁻⁶K⁻¹ to 17* 10⁻⁶K⁻¹.

3. The frame according to Claim 1, **characterized in that** the reinforcing frame is made of low-carbon steel of thermal expansion from 10.5*10⁻⁶ K⁻¹ to 12*10⁻⁶ K⁻¹.

4. The frame according to Claim 1, **characterized in that** the length of the beam (4) of reinforcement L1 in the gripper is equal (from 0.35 to 0.5) the gripper length L.

5. The frame according to Claim 1, **characterized in that** the length of the beam (5) of reinforcement L2 in the gripper is equal from 0.5 to 0.8 of the gripper length L.

6. The frame according to Claim 1, **characterized in that** the reinforcing frame has length L1 which is equal between 0.35 and 0.5 of the gripper length L.

7. The frame according to Claim 1, **characterized in that** the reinforcing frame from the truss (3) is divided into 7-9 sections.

## Patentansprüche

1. Rahmenstruktur für einen Industrierobotergreifer, umfassend einen Stützrahmen und einen Verstärkungsrahmen, wobei der Stützrahmen, miteinander verschweißt, einen Hauptstützträger (1) und Arme (2) umfasst, die an einer Roboterhandachse (6) montierbar sind, wobei der Verstärkungsrahmen aus Verstärkungsträgern (4, 5) oder einem Raumfachwerk (3) besteht, das entlang eines Hauptstützträgers ausgerichtet ist, **dadurch gekennzeichnet, dass** der Verstärkungsrahmen an einer Basis des Stützrahmens von der Seite der Roboterhandachse aus montiert ist, und wobei der Unterschied der Wärmeausdehnungswerte zwischen dem Stützrahmen und dem Verstärkungsrahmen 15 % bis 25 % beträgt.

2. Rahmen nach Anspruch 1, **dadurch gekennzeichnet, dass** der Stützrahmen aus rostfreiem Stahl mit einer Wärmeausdehnung von 15*10⁻⁶ K⁻¹ bis 17*10⁻⁶K⁻¹ hergestellt ist.

3. Rahmen nach Anspruch 1, **dadurch gekennzeichnet, dass** der Verstärkungsrahmen aus kohlenstoffarmem Stahl mit einer Wärmeausdehnung von 10,5*10⁻⁶ K⁻¹ bis 12*10⁻⁶ K⁻¹ hergestellt ist.

4. Rahmen nach Anspruch 1, **dadurch gekennzeichnet, dass** die Länge des Trägers (4) der Verstärkung L1 im Greifer gleich (von 0,35 bis 0,5) der Greiferlänge L ist.

5. Rahmen nach Anspruch 1, **dadurch gekennzeichnet, dass** die Länge des Trägers (5) der Verstärkung L2 im Greifer gleich von 0,5 bis 0,8 der Greiferlänge L ist.

6. Rahmen nach Anspruch 1, **dadurch gekennzeichnet, dass** der Verstärkungsrahmen eine Länge L1 aufweist, die gleich zwischen 0,35 und 0,5 der Greiferlänge L ist.

7. Rahmen nach Anspruch 1, **dadurch gekennzeichnet, dass** der Verstärkungsrahmen des Fachwerks (3) in 7-9 Abschnitte unterteilt ist.

## Revendications

1. Une structure de cadre pour une pince de robot industriel comprenant un cadre de support et un cadre de renforcement, dans laquelle le cadre de support comprend, soudés l'un à l'autre, une poutre de support principale (1) et des bras (2) qui peuvent être montés sur un poignet de robot (6), dans laquelle le cadre de renforcement est constitué de poutres de renforcement (4, 5) ou d'un treillis spatial (3) orienté le long d'une poutre de support principale, **caractérisée en ce que** le cadre de renforcement est monté à une base du cadre de support du côté du poignet du robot, et dans laquelle la différence des valeurs de dilatation thermique entre le cadre de support et le cadre de renforcement est de 15 % à 25 %.

2. Le cadre selon la revendication 1, **caractérisé en ce que** le cadre de support est réalisé en acier inoxydable de dilatation thermique de 15*10⁻⁶K⁻¹ à 17*10⁻⁶K⁻¹.

3. Le cadre selon la revendication 1, **caractérisé en ce que** le cadre de renforcement est réalisé en acier à faible teneur en carbone de dilatation thermique de 10,5* 10⁻⁶ K⁻¹ à 12* 10⁻⁶ K⁻¹.

4. Le cadre selon la revendication 1, **caractérisé en ce que** la longueur L1 de la poutre de renforcement (4) dans la pince est égale (0,35 à 0,5) à la longueur L de la pince.

5. Le cadre selon la revendication 1, **caractérisé en ce que** la longueur L2 de la poutre de renforcement (5) dans la pince est égale à 0,5 à 0,8 de la longueur L de la pince.

6. Le cadre selon la revendication 1, **caractérisé en ce que** le cadre de renforcement a une longueur L1 qui est égale entre 0,35 et 0,5 de la longueur L de la pince.

7. Le cadre selon la revendication 1, **caractérisé en ce que** le cadre de renforcement à partir du treillis (3) est divisé en 7 à 9 sections.
